# EUROPÄISCHE PATENTSCHRIFT

(11) **EP 1 771 670 B1**
(45) Veröffentlichungstag und Bekanntmachung des Hinweises auf die Patenterteilung: **23.09.2009**
(21) Anmeldenummer: 05773358.6
(22) Anmeldetag: 13.07.2005
(51) Int. Cl.: F16D 65/12, F16D 66/00, B60T 8/32, G01P 3/44

(54) **AN EINER RADNABE EINES KRAFTFAHRZEUGES ANSCHLIESSBARES POLRAD**
POLE WHEEL WHICH CAN BE CONNECTED TO A WHEEL HUB OF A MOTOR VEHICLE
ROTOR POUVANT ETRE RACCORDE A UN MOYEU DE ROUE D'UN VEHICULE AUTOMOBILE

(30) Priorität: 16.07.2004 DE 102004034361
(43) Veröffentlichungstag der Anmeldung: 11.04.2007
(73) Patentinhaber: KNORR-BREMSE Systeme für Nutzfahrzeuge GmbH, 80809 München (DE)
(72) Erfinder: PAHLE, Wolfgang, 83707 Bad Wiessee (DE)
(74) Vertreter: Mattusch, Gundula
(86) Internationale Anmeldenummer: PCT/EP2005/007599
(87) Internationale Veröffentlichungsnummer: WO 2006/008044

(56) Entgegenhaltungen:
- EP-A- 1 088 751
- DE-A1- 2 604 599
- US-A- 3 626 226

## Beschreibung

Die vorliegende Erfindung betrifft eine Anordnung einer Radnabe eines Kraftfahrzeuges, einer mit der Radnabe verbundenen Bremsscheibe und eines an der Radnabe angeschlossenen Polrades gemäß dem Oberbegriff des Anspruchs 1.

Polräder kommen als Funktionsteile von Antiblockier-Systemen (ABS) an Kraftfahrzeugen zum Einsatz, wo sie üblicherweise im Anbindungsbereich einer Scheibenbremse an der zugeordneten Radnabe des Kraftfahrzeuges befestigt sind.

Die genannte Scheibenbremse weist dabei eine mit der Radnabe verbundene Bremsscheibe auf, die zur Bremsung des Kraftfahrzeuges von Bremsbacken kontaktiert wird, durch deren an der Bremsscheibe anliegende Reibbeläge die Abbremsung erfolgt.

Neben der Bremsscheibe ist dabei das Polrad, das im übrigen mit einem Sensor in Wirkverbindung steht, verdrehsicher an der Radnabe befestigt. Ein solches Polrad ist beispielsweise aus der DE 102 05 046 A1 und der DE 101 45 947 C1 bekannt.

Zur Bremsmomentenübertragung auf die Radnabe ist auch die Bremsscheibe verdrehgesichert an der Radnabe befestigt, wozu z. B. Außenverzahnungen der Radnabe mit Innenverzahnungen der Bremsscheibe formschlüssig korrespondieren.

Für eine notwendige axiale Fixierung der Bremsscheibe ist es aus der WO 97/48 919 A1 bekannt, einen Anschlagring vorzusehen, der einerseits fest mit der Radnabe verschraubt ist und andererseits an der Bremsscheibe anliegt, wodurch zumindest eine weitgehende Fixierung der Radnabe in axialer Richtung erreicht wird, wobei eine geringfügige axiale Auslenkung lediglich aufgrund der materialbedingten Elastizität des Anschlagringes erfolgt.

Zur Vermeidung auch einer axialen Bewegung in eine Richtung ist aus der nachveröffentlichten DE 103 57 374 A1 ein insoweit fester Anschlag bekannt, an dem die Bremsscheibe anliegt.

In jedem Fall sind für die jedenfalls einseitige axiale Festlegung oder Bewegungsbegrenzung der Bremsscheibe einerseits und für die Funktion des genannten ABS separate Bauteile erforderlich, in letzterem Fall gebildet durch das Polrad.

Naturgemäß führt dies zu relativ hohen Herstellungs- und Montagekosten, die einer Optimierung des Bremssystems insgesamt entgegenstehen.

Der vorliegenden Erfindung liegt daher die Aufgabe zugrunde, eine Anordnung der gattungsgemäßen Art so weiter zu entwickeln, dass die Verwendungsfähigkeit des Polrades verbessert und die Scheibenbremse insgesamt kostengünstiger herstellbar ist.

Diese Aufgabe wird durch eine Anordnung gelöst, die die Merkmale des Anspruchs 1 aufweist.

Durch diese konstruktive Ausbildung kann nun auf den Einsatz einer separaten Axialsicherung der Bremsscheibe in einer Richtung verzichtet werden.

Vielmehr wird diese Funktion von dem entsprechend modifizierten Polrad mit übernommen. Durch diese sozusagen Multifunktion des Polrades ergeben sich erhebliche Vorteile, vor allem bei der Herstellung und Montage der Scheibenbremse, da der Kranz des Polrades und der angeschlossene Anschlag vorzugsweise einstückig ausgebildet sind, wobei der Anschlag zweckmäßigerweise als radial sich erstreckender, umlaufender Kragen ausgebildet ist, der sich parallel zum Kranz, jedoch in entgegengesetzte Richtung erstreckt.

Dabei können der Kranz und der Anschlag durch einen rechtwinklig dazu oder geneigten umlaufenden Steg verbunden sein, so dass sich ein im wesentlichen Z-förmiger Querschnitt ergibt.

Prinzipiell ist die Herstellung des Polrades als Blech-Stanzteil denkbar, wodurch sich eine besonders preiswerte Fertigung ergibt.

Um eine ausreichende Formsteifigkeit des Anschlages zu erreichen, kann dieser nach einer vorteilhaften Weiterbildung der Erfindung mit Sicken oder eingeprägten Rippen versehen sein. Denkbar ist auch, den Anschlag umzubördeln oder am freien Randbereich gleichgerichtet zum Steg abzuwinkeln, so dass sich etwa eine U-Form ergibt, gebildet durch die Abwinklung, den Anschlag und den Steg.

Derartige Maßnahmen zur Erhöhung der Formsteifigkeit des Anschlages sind erforderlich, weil der Kranz mit den umfänglich verteilten Durchbrechungen aus fertigungstechnischen Gründen aus einem relativ dünnen Blech gebildet ist, üblicherweise mit einer Dicke von 2 mm. Nur bei solchen dünnen Blechen lässt sich eine ausreichend genaue Verzahnung herstellen, die durch die Durchbrechungen gebildet wird.

Nach einer weiteren vorteilhaften Ausbildung der Erfindung ist das Polrad insgesamt mit der Radnabe verschraubt. Hierzu sind axial zur Radnabe über den Umfang verteilte, vorzugsweise in gleichem Winkelabstand durch den Anschlag geführte Schrauben vorgesehen, die in die eingangs erwähnten Nabenzähne der Radnabe eingeschraubt sind, die zur Drehmomentenübertragung mit einer Verzahnung der Bremsscheibe korrespondieren.

Der Anschluss des Polrades, also des Kranzes und des Anschlages an der Radnabe bietet den Vorteil gegenüber den bekannten Anschlag-Konstruktionen, dass die Verbindungsmittel außerhalb der sich im Bremsfall stark erhitzenden Bremsscheibe platziert sind, so dass die Gefahr eines Lösens der Schrauben durch übermäßige Erwärmung wirksam verhindert wird.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: ein an eine Radnabe montiertes erfindungsgemäßes Polrad in einer teilweise geschnittenen perspektivischen Ansicht
- Figur 2: eine Einzelheit der Figur 1, ebenfalls in einer geschnittenen Per- spektiv-Darstellung
- Figur 3: ein weiteres, montiertes Ausführungsbeispiel der Erfindung in einem Querschnitt dargestellt
- Figuren 4 u. 5: jeweils weitere Ausführungsbeispiele eines erfindungsgemäßen Polrades in geschnittener perspektivischer Ansicht

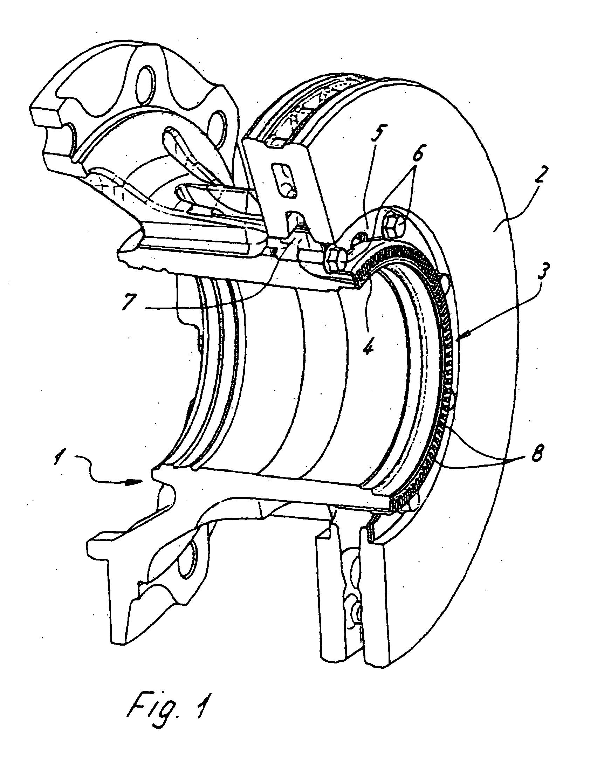

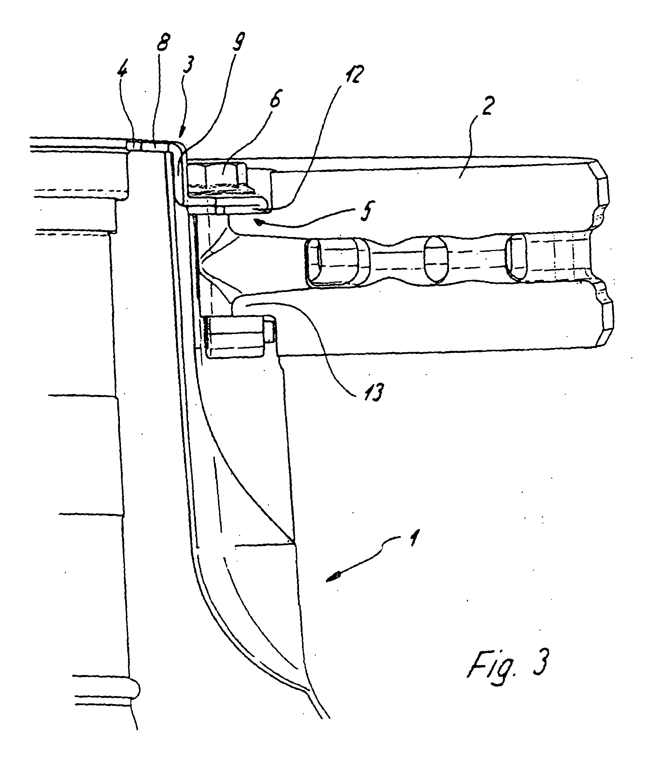

In der Figur 1 ist ein Polrad 3 für eine Scheibenbremse eines Fahrzeuges erkennbar, das an eine Radnabe 1 eines Kraftfahrzeuges stirnseitig angeschlossen ist. Im zugeordneten freien Endbereich ist auf der Radnabe 1 eine Bremsscheibe 2 verdrehsicher befestigt, wozu auf der Radnabe 1 umlaufend Zähne 7 vorgesehen sind, die mit einer daran angepassten Innenverzahnung 13 (Figur 3) der Bremsscheibe 2 korrespondieren, so dass Bremsmomente von der Bremsscheibe 2 auf die Radnabe 1 übertragen werden können.

Das Polrad 3 weist einen umlaufenden, radial ausgerichteten ringförmigen Kranz 4 auf, der mit einer Vielzahl von in gleichen Winkelabständen zueinander angeordneten Durchbrechungen 8 versehen ist.

Abgewinkelt zu dem an der freien Stirnseite der Radnabe 1 anliegenden Kranz 4 ist ein in Richtung der Bremsscheibe 2 verlaufender umfänglicher Steg 9 angeformt, an den sich, wiederum abgewinkelt ein Anschlag 5 anschließt, in Form eines umlaufenden Kragens, der an der Bremsscheibe 2 anliegt und für diese einseitig eine axiale Fixierung bildet.

Der Steg 9 kann rechtwinklig oder sich zum Kranz 4 hin verjüngend ausgebildet sein, während der Anschlag 5 und der Kranz 4 parallel oder geneigt, jedoch entgegengesetzt radial verlaufen.

Zur Befestigung des Polrades 3 und damit des Kranzes 4 sowie des Anschlages 5 sind in dem Anschlag 5 Durchgangsbohrungen 14 eingebracht, vorzugsweise in gleichen Winkelabständen, durch die Schrauben 6 geführt sind, deren Gewindeschaft 11 jeweils in eine Gewindebohrung 10 eines Zahnes 7 der Radnabe 1 eingeschraubt sind.

Durch die außerhalb der axial unverschieblichen Bremsscheibe 2 liegenden Verbindungen des Anschlages 5 bzw. des gesamten Polrades 3 wird eine Wärmebeaufschlagung der Schrauben 6, wie sie ansonsten durch die beim Bremsen auftretende Reibwärme der Bremsscheibe 2 auftreten könnte, vermieden.

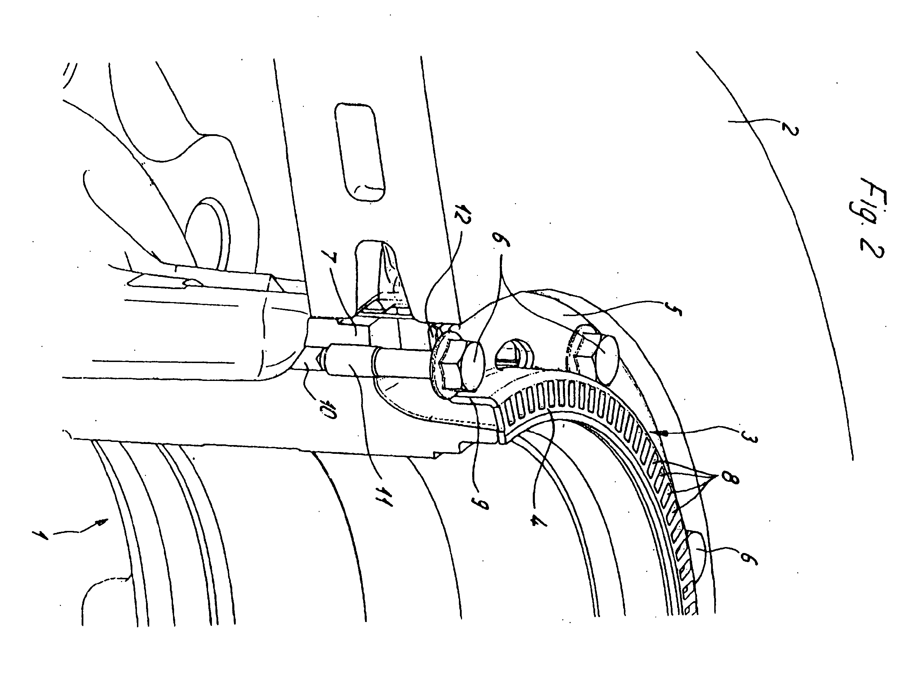

In den Figuren 2 und 3 ist zu erkennen, dass zur Erhöhung der Formsteifigkeit der Anschlag 5 zu einer Dopplung 12 umgebördelt ist, so dass die auftretenden Verformungskräfte problemlos aufgenommen werden können.

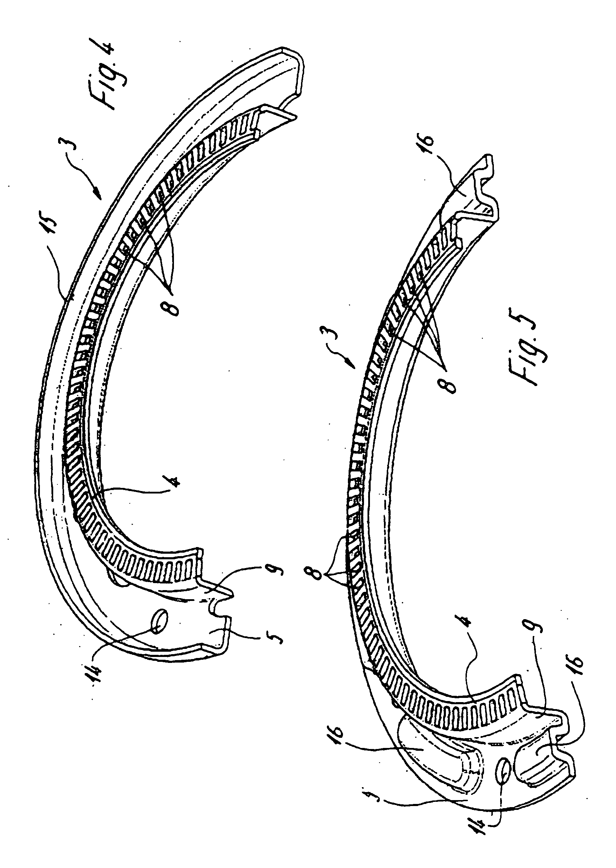

Eine jeweils andere Möglichkeit der Erhöhung der Formsteifigkeit, also einer Erhöhung des Widerstandsmomentes des Anschlages 5 ist in den Figuren 4 und 5 gezeigt. Das Ausführungsbeispiel nach Figur 4 weist dabei in dem dem Kranz 4 gegenüberliegenden Umfangsbereich einen abgewinkelten Rand 15 auf, der sich parallel und gleichgerichtet zum Steg 9 erstreckt, so dass sich im Querschnitt eine U-Form ergibt.

In der Figur 5 schließlich sind zur Verstärkung des Anschlages 5 über den Umfang verteilt, vorzugsweise gleichmäßig, Sicken 16 vorgesehen, die durch Prägen eingebracht sind und sich auf der dem Kranz 4 zugewandten Seite des Anschlages 5 erheben, während die gegenüberliegende Seite jeweils eine Vertiefung bildet.

Die Sicken 16 sind dabei entsprechend dem Krümmungsradius geformt und nehmen eine längliche Gestalt ein.

Zweckmäßigerweise ist jeweils zwischen zwei Sicken 16 ein Durchgangsloch 14 angeordnet, wobei der Abstand zwischen den einzelnen Sicken 16 so groß gehalten ist, dass der Kopf der dann eingesteckten Schraube problemlos auf dem Anschlag 5 aufliegen kann bzw. ein Werkzeug, beispielsweise in Form eines Schraubenschlüssels ohne weiteres zum Einsatz kommen kann.

Anstelle des gezeigten abgewinkelten Randes 15 bzw. der Sicken 16 sind durchaus auch andere Versteifungsformen denkbar, wie Rippen oder dergleichen.

### Bezugszeichenliste

- 1.: Radnabe
- 2.: Bremsscheibe
- 3.: Polrad
- 4.: Kranz
- 5.: Anschlag
- 6.: Schraube
- 7.: Zahn
- 8.: Durchbrechung
- 9.: Steg
- 10.: Gewindebohrung
- 11.: Gewindeschaft
- 12.: Doppelung
- 13.: Verzahnung
- 14.: Durchgangsbohrung
- 15.: Rand
- 16.: Sicke

## Patentansprüche

1. Anordnung einer Radnabe (1) eines Kraftfahrzeuges, einer mit der Radnabe (1) verbundenen Bremsscheibe (2) und eines an der Radnabe (1) angeschlossenen Polrades, das einen sich radial erstreckenden, einen Innenvand bildenden ringförmigen Kranz (4) aufweist, der mit einer Vielzahl in gleichen Winkelabständen zueinander angeordneten Durchbrechungen (8) versehen ist, **dadurch gekennzeichnet, dass** an den Kranz (4) direkt oder indirekt ein formsteif ausgebildeter Anschlag (5) angeformt ist, der zur axialen Fixierung der Bremsscheibe (2) an der Bremsscheibe (2) anliegt.

2. Anordnung nach Anspruch 1, **dadurch gekennzeichnet, dass** der Anschlag (5) als umlaufender Kragen ausgebildet ist, der parallel oder geneigt, jedoch radial entgegengesetzt gerichtet zum Kranz (4) verläuft.

3. Anordnung nach Anspruch 1 oder 2, **dadurch gekennzeichnet, dass** der Anschlag (5) und der Kranz (4) durch einen dazu abgewinkelten, etwa axial ausgerichteten Steg (9) verbunden sind.

4. Anordnung nach Anspruch 3, **dadurch gekennzeichnet, dass** der Steg (9) rechtwinklig oder schräg zum Anschlag (5) bzw. zum Kranz (4) verläuft.

5. Anordnung nach Anspruch 3 oder 4, **dadurch gekennzeichnet, dass** der Kranz (4), der Anschlag (5) und der Steg (9) einstückig als Stanzteil ausgebildet sind.

6. Anordnung nach einem der vorhergehenden Ansprüche, **dadurch gekennzeichnet, dass** in dem Anschlag (5) Durchgangslöcher (14) vorgesehen sind zum Durchstecken von Schrauben (6), mit denen das Polrad (3) an der Radnabe (1) befestigt ist.

7. Anordnung nach Anspruch 6, **dadurch gekennzeichnet, dass** die Schrauben (6) in Gewindebohrungen (10) von Außenzähnen (7) der Radnabe (1) einschraubbar sind, die mit einer Innenverzahnung (13) der Bremsscheibe (2) in Korrespondenz bringbar sind.

8. Anordnung nach einem der Ansprüche 6 oder 7, **dadurch gekennzeichnet, dass** die Durchgangslöcher (14) im gleichen Winkelabstand zueinander stehen.

9. Anordnung nach einem der vorhergehenden Ansprüche, **dadurch gekennzeichnet, dass** der Anschlag (5) zur Erhöhung der Biegesteifigkeit Versteifungselemente aufweist.

10. Anordnung nach Anspruch 9, **dadurch gekennzeichnet, dass** zur Versteifung des Anschlags (5) dessen äußerer Randbereich zu einem abgewinkelten Rand (15) geformt ist, der sich etwa parallel und gleichgerichtet zum Steg (9) erstreckt.

11. Anordnung nach Anspruch 9, **dadurch gekennzeichnet, dass** der Anschlag (5) mit Sicken (16) oder Rippen versehen ist.

12. Anordnung nach Anspruch 11, **dadurch gekennzeichnet, dass** die Sicken (16) eingeprägt sind.

13. Anordnung nach einem der Ansprüche 11 oder 12, **dadurch gekennzeichnet, dass** jeweils zwischen zwei Sicken (16) ein Durchgangsloch (14) angeordnet ist.

14. Anordnung nach Anspruch 9, **dadurch gekennzeichnet, dass** der Anschlag (5) eine durch Umbördeln gebildete Dopplung (12) aufweist.

## Claims

1. Arrangement of a rotor connected to a wheel hub (1) of a motor vehicle, which comprises a radially extending annular rim (4) forming an inside edge of a brake disc (2) connected to said wheel hub (1) and an edge at said wheel hub (1), which rim is provided with a plurality of breakthrough sections (8) formed at equal angular distances relative to each other, **characterised in that** a mechanical stop (5) is integrally formed directly or indirectly on said rim (4), which has a dimensionally rigid configuration and which bears against said brake disc (2) for axially fixing said brake disc (2).

2. Arrangement according to Claim 1, **characterised in that** said mechanical stop (5) is designed as peripheral collar extending in parallel to or at in inclination relative to said rim (4), however in an orientation radially opposite to that of said rim (4).

3. Arrangement according to Claim 1 or 2, **characterised in that** said mechanical stop (5) and said rim (4) are connected by a web (9) bent at an angle to the latter and having an approximately axial orientation.

4. Arrangement according to Claim 3 or 4, **characterised in that** said web (9) extends at a right angle or obliquely relative to said mechanical stop (4) or said rim (4), respectively.

5. Arrangement according to Claim 3 or 4, **characterised in that** said rim (4), said mechanical stop (5) and said web (9) are configured as a single stamped part.

6. Arrangement according to any of the preceding Claims, **characterised in that** through-holes (14) are provided in said mechanical stop (5) for passing screws (6) therethrough which fasten said rotor (3) on said wheel hub (1).

7. Arrangement according to Claim 6, **characterised in that** said screws (6) are provided for being screwed into threaded holes (10) of outside teeth (7) on said wheel hub (1), which are adapted to be carried into correspondence with an internal toothing (13) of said brake disc (2).

8. Arrangement according to any of the Claims 6 or 7, **characterised in that** said through-holes (14) are formed at equal angular distances relative to each other.

9. Arrangement according to any of the preceding Claims, **characterised in that** said mechanical stop (5) is provided with stiffening elements so as to increase the stiffness under flexure.

10. Arrangement according to Claim 9, **characterised in that** the outside marginal zone of said mechanical stop (5) is shaped to form a bent edge (15) for stiffening said mechanical stop, which edge extends approximately in parallel to said web (9) with the same orientation as the latter.

11. Arrangement according to Claim 9, **characterised in that** said mechanical stop (5) is provided with beads (16) or ribs.

12. Arrangement according to Claim 11, **characterised in that** said beads (16) are embossed.

13. Arrangement according to any of the Claims 11 or 12, **characterised in that** a respective through-hole (14) is provided between two beads (16).

14. Arrangement according to Claim 9, **characterised in that** said mechanical stop (5) presents a duplication (12) formed by peripheral crimping.

## Revendications

1. Arrangement d'un rotor raccordé à un moyeu de roue (1) d'un véhicule automobile, qui comprend une couronne annulaire (4) s'étendant en sens radial, qui constitue un bord intérieur d'un disque de frein (2) raccordé audit moyeu de roue (1) et un bord audit moyeu de roue (1), laquelle couronne est pourvue d'une pluralité de perçages (8) formés aux écarts angulaires égaux l'un relativement à l'autre, **caractérisé en ce qu'**une butée (5) est intégralement formée directement ou indirectement à ladite couronne (4), qui présente une configuration à rigidité dimensionnelle et qui porte contre ledit disque de frein (2) afin de fixer ledit disque de frein (2) en sens axial.

2. Arrangement selon la revendication 1, **caractérisé en ce que** ladite butée (5) est conçue sous forme d'un collet périphérique s'étendant en parallèle à ou à un biais relatif à ladite couronne (4), cependant à une orientation radialement opposée à l'orientation de ladite couronne (4).

3. Arrangement selon la revendication 1 ou 2, **caractérisé en ce que** ladite butée (5) et ladite couronne (4) sont reliées moyennant une entretoise (9) pliée à un angle relatif à la dernière et ayant une orientation axiale environ.

4. Arrangement selon la revendication 3 ou 4, **caractérisé en ce que** ladite entretoise (9) s'étend à un angle droit ou en biais relativement à ladite butée (4) ou respectivement à ladite couronne (4).

5. Arrangement selon la revendication 3 ou 4, **caractérisé en ce que** ladite couronne (4), ladite butée (5) et ladite entretoise (9) sont conçues en tant qu'une seule pièce découpée.

6. Arrangement selon une quelconque des revendications précédentes, **caractérisé en ce que** des trous de passage (14) sont formés dans ladite butée (5) pour le passage des vis (6) fixant ledit rotor (3) audit moyeu de roue (1).

7. Arrangement selon la revendication 6, **caractérisé en ce que** lesdites vis (6) sont aptes à être vissé dans des alésages filetés (10) des dents extérieurs (7) audit moyeu de roue (1), qui sont aptes à être porté en correspondance avec une denture intérieure (13) dudit disque de frein (2).

8. Arrangement selon une quelconque des revendications 6 ou 7, **caractérisé en ce que** lesdits trous de passage (14) sont formés aux écarts angulaires égaux l'un relativement à l'autre.

9. Arrangement selon une quelconque des revendications précédentes, **caractérisé en ce que** ladite butée (5) est pourvue des éléments de renforcement afin d'augmenter la rigidité flexionnelle.

10. Arrangement selon la revendication 9, **caractérisé en ce que** la zone extérieure marginale de ladite butée (5) est formée de façon à constituer un bord plié (15) pour la renforcement de ladite butée, ce bord s'étendant environ en parallèle à ladite entretoise (9) à la même orientation que la dernière.

11. Arrangement selon la revendication 9, **caractérisé en ce que** ladite butée (5) est pourvue des moulures (16) ou nervures.

12. Arrangement selon la revendication 11, **caractérisé en ce que** lesdites moulures (16) sont empreintes.

13. Arrangement selon une quelconque des revendications 11 ou 12, **caractérisé en ce qu'**un trou de passage respectif (14) est formé entre deux moulures (16).

14. Arrangement selon la revendication 9, **caractérisé en ce que** ladite butée (5) présente un doublement (12) formé par bordelage.
